(19) Europäisches Patentamt
European Patent Office
Office européen des brevets

(11) Numéro de publication: **0 499 878 A1**

(12) **DEMANDE DE BREVET EUROPEEN**

(21) Numéro de dépôt: **92101848.7**

(22) Date de dépôt: **05.02.92**

(51) Int. Cl.$^5$: **G02F 1/133**, G09G 3/18, B60R 1/08

(30) Priorité: **13.02.91 CH 447/91**
**18.02.91 FR 9101994**

(43) Date de publication de la demande:
**26.08.92 Bulletin 92/35**

(84) Etats contractants désignés:
**DE ES GB IT NL SE**

(71) Demandeur: **ASULAB S.A.**
**Faubourg du Lac 6**
**CH-2501 Bienne(CH)**

(72) Inventeur: **Fridolin, Wiget**
**Avenue des Alpes 22**
**CH-2000 Neuchâtel(CH)**

(74) Mandataire: **de Raemy, Jacques et al**
**ICB Ingénieurs Conseils en Brevets SA**
**Passage Max. Meuron 6**
**CH-2001 Neuchâtel(CH)**

(54) **Dispositif optique commandable en fréquence.**

(57) Le dispositif comprend une cellule optique (20) comportant un matériau optiquement actif, par exemple un cristal liquide, dont la transparence est fonction de la tension électrique appliquée et un circuit de commande (22), caractérisé en ce que ledit matériau optiquement actif présente une impédance électrique variable avec la fréquence du signal appliqué et en ce que ledit circuit de commande comprend une source de tension et un moyen de commande de la fréquence du signal délivré par ladite source de tension.

Application comme atténuateur de lumière, notamment pare-soleil ou rétroviseur pour automobile.

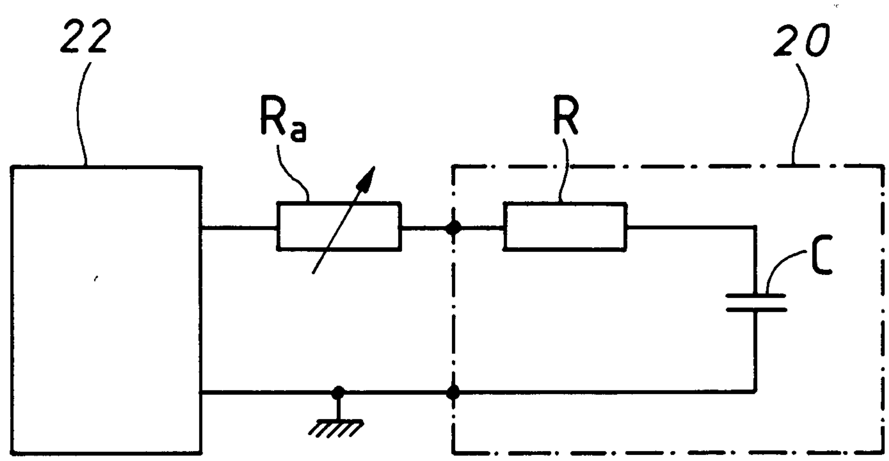


Fig. 3

EP 0 499 878 A1

La présente invention concerne un dispositif optique à coefficient d'absorption commandable, comprenant une cellule optique comportant un matériau optiquement actif, tel qu'un cristal liquide, et un circuit de commande électrique de la transparence de ce matériau optiquement actif. Le dispositif de l'invention trouve notamment application comme filtre, atténuateur ou diaphragme. Dans le domaine automobile, il peut être en particulier utilisé comme pare-soleil ou comme rétroviseur.

Les cellules optiques communément utilisées comme atténuateur de lumière sont généralement constituées d'un film de cristal liquide disposé entre deux électrodes, la transparence de la cellule étant commandée par l'amplitude du signal de tension électrique appliqué sur les électrodes.

Dans le cas de la cellule optique la plus simple, c'est-à-dire la cellule à deux états optiques (opaque et transparent), il suffit de deux tensions $V_{on}$ et $V_{off}$, respectivement supérieure et inférieure à une tension $V_{thr}$ de seuil de commutation de la cellule optique. Au contraire dans le cas d'une cellule optique à niveaux de gris, il faut utiliser autant de tensions que l'on veut de niveaux de gris.

Dans tous les cas, le circuit de commande doit être conçu pour produire une pluralité de signaux de tension d'amplitudes différentes. Il faut de plus que ces amplitudes soient définies de manière précise, puisqu'elles déterminent directement le degré de transparence de la cellule optique. Ceci rend difficile l'utilisation d'un circuit de commande simple, dans lequel les différentes tensions seraient obtenues par des ponts diviseurs formés de résistances, car une telle construction ne permet pas d'atteindre une précision suffisante. Il est donc nécessaire de recourir à une construction plus complexe, par exemple d'utiliser une source de tension propre par signal de tension.

L'invention a pour but de commander de manière précise une cellule optique par un circuit de commande de construction simple, quel que soit le nombre de niveaux de gris de la cellule optique.

A cette fin, l'invention a pour objet un dispositif optique à coefficient d'absorption commandable comprenant une cellule optique comportant un matériau optiquement actif disposé entre deux électrodes, la transparence dudit matériau optique étant fonction de la tension électrique appliquée entre lesdites électrodes et un circuit de commande relié électriquement auxdites électrodes, qui se caractérise en ce que ledit matériau optiquement actif présente une impédance électrique variable avec la fréquence du signal appliqué sur lesdites électrodes et en ce que ledit circuit de commande comprend une source de tension et un moyen de commande de la fréquence du signal délivré par ladite source de tension.

De manière préférée, la source de tension est un oscillateur commandable en tension et le moyen de commande délivre un signal sur l'entrée de commande de cet oscillateur.

Ce moyen de commande peut comprendre avantageusement un moyen de détection de la lumière incidente et/ou un moyen de détection de la lumière ambiante pour commander la transparence du matériau optiquement actif de la cellule optique en fonction de l'intensité de ce(s) éclairement(s).

Les caractéristiques et avantages de l'invention ressortiront mieux de la description qui va suivre, donnée à titre illustratif mais non limitatif, en référence aux dessins annexés, sur lesquels :

- la figure 1 représente en coupe une cellule à cristal liquide qui peut être commandée conformément à l'invention,
- la figure 2 représente schématiquement un circuit électrique équivalent à la cellule à cristal liquide de la figure 1,
- la figure 3 représente schématiquement un dispositif optique selon l'invention,
- la figure 4 illustre un premier mode de réalisation du circuit de commande du dispositif de l'invention,
- la figure 5 illustre un deuxième mode de réalisation du circuit de commande du dispositif de l'invention,
- la figure 6 illustre un mode de réalisation du moyen de commande du circuit de la figure 5, pour commander le coefficient d'absorption du dispositif optique en fonction de l'intensité de la lumière incidente, et
- la figure 7 illustre un autre mode de réalisation du moyen de commande du circuit de la figure 5, pour commander le coefficient d'absorption du dispositif optique en fonction de l'intensité de la lumière incidente et de la lumière ambiante.

La figure 1 représente schématiquement, en coupe, une cellule à cristal liquide classique. Cette cellule 2 comprend un film de cristal liquide 4 disposé dans un logement défini par deux plaquettes de verre 6, 8 et par un cadre de colle 10. Les faces internes des deux plaquettes 6, 8 comportent chacune une électrode 12, 14. Une partie de chaque électrode s'étend au-delà du cristal liquide, pour former un contact électrique sur lequel est soudé un conducteur électrique 16, 18 destiné à être relié au circuit de commande.

Dans le cadre de l'invention, la cellule à cristal liquide peut être n'importe quelle cellule connue utilisable pour former un atténuateur de lumière, progressif ou à deux états opaque/transparent.

Pour comprendre l'invention, il convient de rappeler brièvement le fonctionnement électrique d'une cellule à cristal liquide. Comme on l'a représenté schématiquement sur la figure 2, une cellule à cristal

liquide se compose principalement d'un condensateur C, formé par le film de cristal de liquide, et de deux résistances $R_1$, $R_2$, formés par les soudures et les conducteurs électriques. La transparence du cristal liquide est commandée par la tension $V_{CL}$ aux bornes du condensateur. Celle-ci est liée à la tension $V_O$ appliquée aux conducteurs par la relation :

$$V_{CL} = V_0 \cdot \frac{1}{[1 + (RC\omega)^2]^{1/2}} \quad \text{, avec } R = R_1 + R_2$$

où $\omega$ est la pulsation du signal de commande.

De manière générale, dans une cellule à cristal liquide classique, l'impédance électrique $Z_R = R$ est très inférieure à l'impédance électrique $Z_C = 1/(C\omega)$, de sorte que $V_{CL}$ est pratiquement égal à $V_O$. Par conséquent, la commutation de la cellule s'obtient naturellement en modifiant l'amplitude de la tension de commande $V_O$.

Cependant, on a constaté que, lorsque les connexions électriques entre les conducteurs et les électrodes étaient faites non plus sur la face des plaquettes en verre mais sur la tranche de celles-ci, comme décrit dans la demande de brevet EP- 0 359 082 au nom du demandeur, la valeur de la résistance électrique pouvait présenter une dispersion importante d'une cellule à l'autre selon la qualité de la soudure. On comprend que si cette résistance est suffisamment importante la tension $V_{CL}$, définie par la relation ci-dessus, peut être notablement inférieure à la tension $Y_O$ et ainsi ne pas permettre la commutation de la cellule.

L'invention consiste à munir la cellule d'une résistance électrique ayant une valeur suffisamment élevée pour que la tension $V_{CL}$ varie fortement avec la fréquence du signal de commande, et à commander la cellule en modifiant la fréquence du signal de commande, au lieu de modifier son amplitude.

La figure 3 illustre schématiquement un dispositif optique selon l'invention comprenant une cellule à cristal liquide 20, formée d'une résistance R et d'un condensateur C, une résistance ajustable $R_a$ et un circuit de commande 22. Ce dernier délivre un signal de commande S, d'amplitude $V_O$ et dont la fréquence f peut être choisie dans un ensemble de fréquences comprenant au moins deux fréquences $f_1$, $f_2$ ou peut être ajustée de manière continue dans une gamme de fréquence [$f_1$, $f_2$]. La résistance $R_a$ est ajustée pour que les tensions $V_{CL1}$ et $V_{CL2}$ obtenues avec les fréquences extrêmes $f_1$ et $f_2$ correspondent aux deux états extrêmes désirés de transparence du film de cristal liquide.

A titre d'example, le demandeur a réalisé un dispositif optique commandable en fréquence, comprenant une cellule à cristal liquide de type dichroïque, et ayant les caractéristiques suivantes : C = 75 nF; R = 5 kΩ; Ra = 95 kΩ; $V_O$ = 12 V et dont les tensions de commutation $V_{CL,off}$ et $V_{CL,on}$ sont égales à 2,3 V et 4 V respectivement. Par la relation définie plus haut, on obtient les fréquences correspondantes $f_{off}$ = 217 Hz et $f_{on}$ = 120 Hz.

Ainsi, en appliquant un signal $V_O$ de fréquence variant entre $f_{off}$ et $f_{on}$, on obtient toutes les nuances de gris entre l'état transparent et l'état opaque.

Les figures 4 à 7 illustrent des modes de réalisation du circuit de commande.

Le circuit de commande de la figure 4 est adapté à une cellule à cristal liquide à deux états opaque/transparent. Il comprend une source de tension 24, délivrant un signal d'amplitude et de fréquence constantes, et un diviseur de fréquence 26 divisant par 1 ou par N, selon le signal de commande appliqué sur son entrée de commande EC. L'amplitude du signal délivré par la source de tension et le taux de division N sont choisis de manière que la tension aux bornes du condensateur C soit inférieure (resp. supérieure) à la tension de seuil de la cellule lorsque le taux de division est égal à N (resp. 1).

Dans le cas d'une cellule à niveaux de gris, la tension $V_{CL}$ doit pouvoir prendre une pluralité de valeurs différentes, voire varier de manière continue entre deux valeurs extrêmes. Le circuit de commande peut alors se composer avantageusement, comme on l'a représenté sur la figure 5, d'un oscillateur commandable en tension 28 (en abrégé V.C.O) et d'un moyen de commande 30 de ce V.C.O. Le moyen de commande 30 délivre un signal dont l'amplitude définit la fréquence du signal délivré par la V.C.O. et, par suite, l'amplitude du signal $V_{CL}$.

Le moyen de commande peut être de type manuel, tel qu'un potentiomètre relié à une source de tension. Il peut être également automatique, comme dans les modes de réalisation représentés sur les figures 6 et 7.

Le moyen de commande représenté sur la figure 6 comprend un pont diviseur disposé entre une source de tension et l'entrée de commande du V.C.O. Le pont diviseur se compose d'une résistance fixe $R_f$ et d'une photorésistance $R_{inc}$. La valeur de cette photorésistance décroit lorsque la lumière atteignant la cellule augmente. La disposition correspond aux cas d'un V.C.O. dont la fréquence augmente avec l'amplitude du signal de commande et d'une cellule à contraste positif. Ainsi, lorsque la lumière incidente augmente, l'amplitude du signal délivré par le moyen de commande diminue, ce qui induit une diminution de la fréquence du signal délivré par le V.C.O. et donc une diminution de la transparence de la cellule. Une telle structure convient par exemple pour une cellule à cristal liquide utilisée comme pare-soleil ou comme vitre à transparence ajustable.

Elle convient également pour une cellule à cristal liquide dont la face arrière est pourvue d'une couche réfléchissante et qui est utilisée comme miroir ou rétroviseur dans une automobile. Dans cette application, il peut être intéressant de prévoir également un moyen de détection de la lumière ambiante. A cette fin, comme le montre la figure 7, le moyen de commande comporte une photorésistance $R_{amb}$ en parallèle avec la résistance $R_f$. Une résistance supplémentaire $R_s$, de préférence ajustable, peut être ajoutée en parallèle avec la résistance $R_{inc}$, pour équilibrer et ajuster la réponse du moyen de commande en fonction du V.C.O. utilisé.

Lorsque la cellule à cristal liquide est utilisée comme rétroviseur dans une automobile, les photorésistances $R_{inc}$ et $R_{amb}$ sont montées de manière à détecter respectivement l'intensité lumineuse à l'arrière du véhicule et l'intensité lumineuse à l'avant du véhicule.

Bien entendu, il est possible de munir le moyen de commande uniquement d'une photorésistance conçue pour détecter l'intensité de la lumière ambiante.

Enfin, il est clair que la disposition des photorésistances peut être différente de celle représentée puisqu'elle dépend notamment du type de variation, direct ou indirect, de la fréquence du V.C.O. avec l'amplitude du signal de commande et du contraste, positif ou négatif, de la cellule à cristal liquide.

## Revendications

**1.** Dispositif optique à coefficient d'absorption commandable comprenant une cellule optique (20) comportant un matériau optiquement actif (4) disposé entre deux électrodes (12, 14), la transparence dudit matériau optique étant fonction de la tension électrique ($V_{CL}$) appliquée entre lesdites électrodes et un circuit de commande (22) relié électriquement auxdites électrodes, caractérisé en ce que ledit matériau optiquement actif présente une impédance électrique variable avec la fréquence du signal appliqué sur lesdites électrodes et en ce que ledit circuit de commande comprend une source de tension (24, 28) et un moyen de commande (26, 30) de la fréquence du signal délivré par ladite source de tension.

**2.** Dispositif selon la revendication 1, pour une cellule à deux états optiques, la commutation de ladite cellule ayant lieu pour une tension de seuil $V_{thr}$, caractérisé en ce que le circuit de commande est conçu pour délivrer un premier signal de fréquence $f_1$ pour commuter ladite cellule dans un état et un second signal de fréquence $f_2$ pour commuter ladite cellule dans l'autre état.

**3.** Dispositif selon la revendication 1, pour une cellule à niveaux de gris, caractérisé en ce que le circuit de commande est conçu pour délivrer un signal de fréquence ajustable par pas ou de manière continue entre deux fréquences extrêmes correspondant à deux états opposés de la cellule.

**4.** Dispositif selon l'une quelconque des revendications 2 ou 3, caractérisé en ce que la source de tension est un oscillateur commandable en tension (28).

**5.** Dispositif selon la revendication 4, caractérisé en ce que le circuit de commande comprend un moyen de détection de la lumière incidente ($R_{inc}$), le signal délivré par ledit moyen de détection agissant sur ledit oscillateur commandable en tension (28).

**6.** Dispositif selon l'une quelconque des revendications 4 ou 5, caractérisé en ce que le circuit de commande comprend un moyen de détection de la lumière ambiante ($R_{amb}$), le signal délivré par ledit moyen de détection agissant sur ledit oscillateur commandable en tension (28).

**7.** Dispositif selon l'une quelconque des revendications 1 à 6, caractérisé en ce que ladite cellule est un miroir.

**8.** Dispositif selon la revendication 7 utilisé comme rétroviseur automobile.

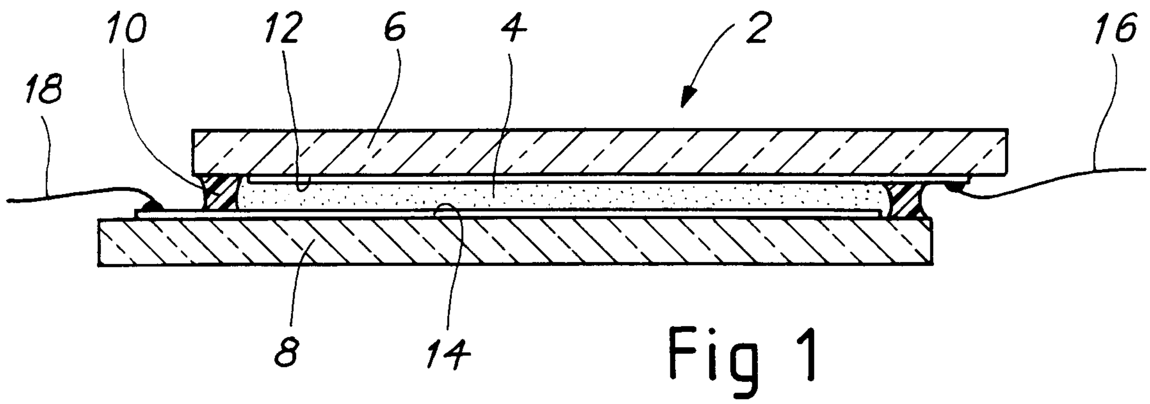


Fig 1

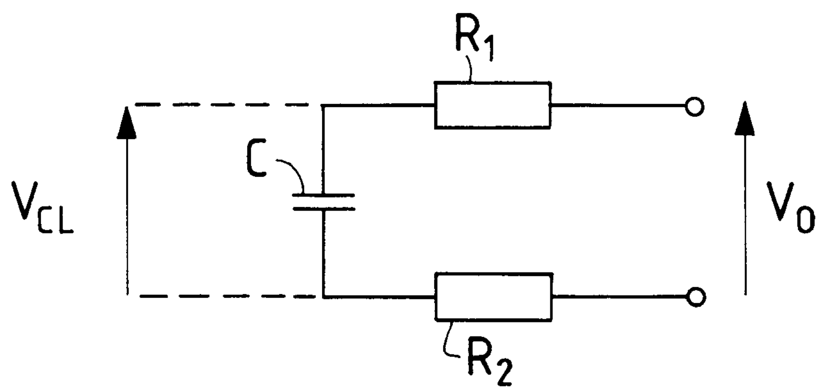


Fig. 2

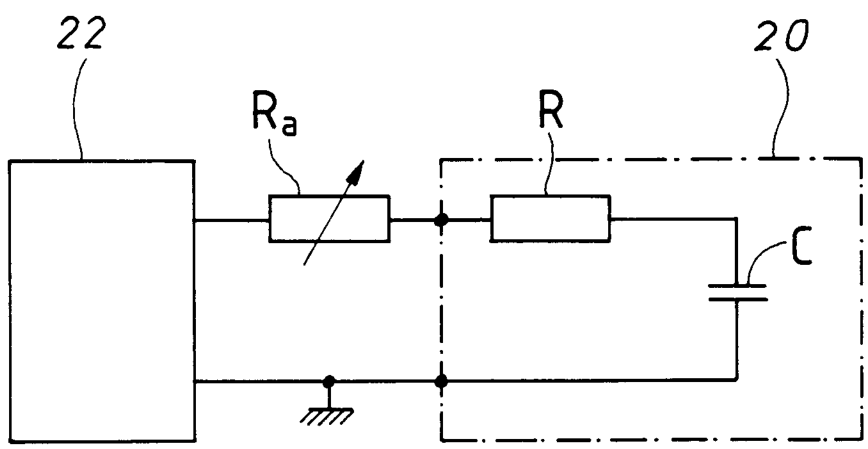


Fig. 3

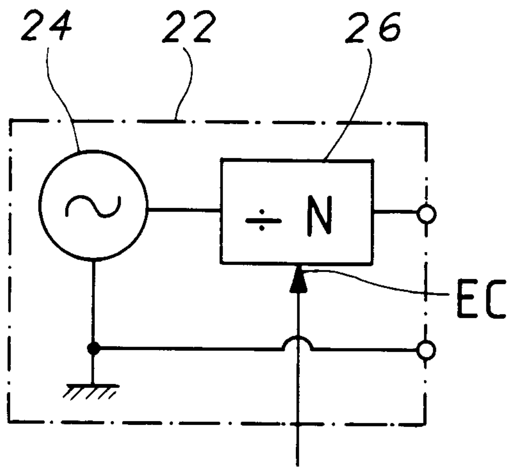


Fig. 4

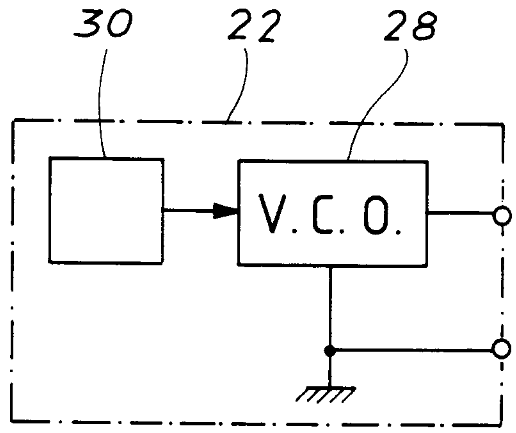


Fig. 5

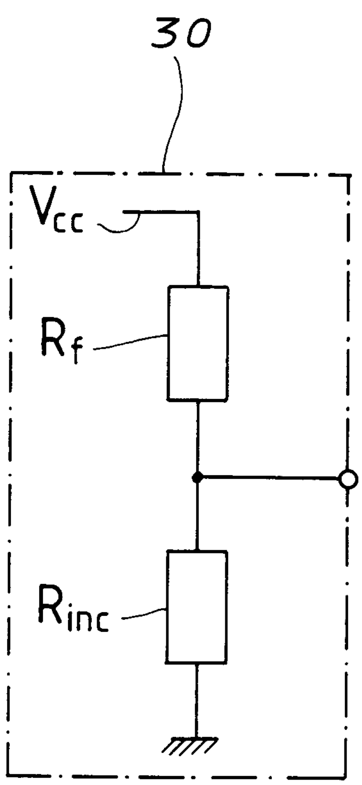


Fig. 6

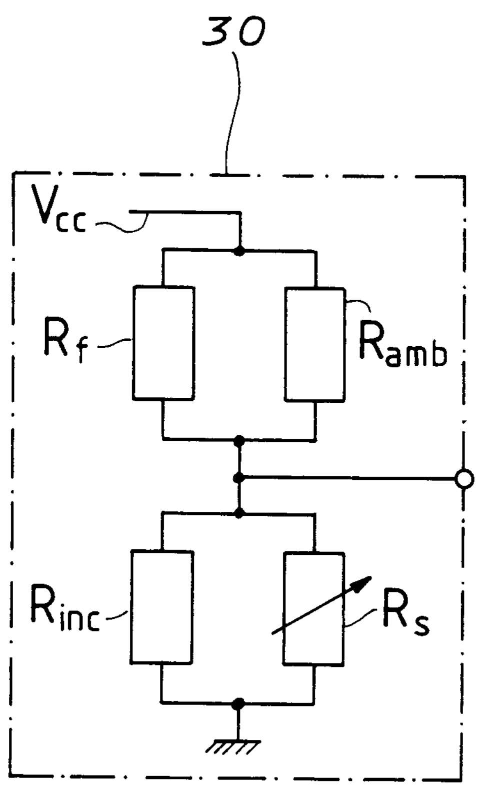


Fig. 7

Office européen des brevets

# RAPPORT DE RECHERCHE EUROPEENNE

Numero de la demande

EP 92 10 1848

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | US-A-3 907 405 (M. FUKAI ET AL.)<br>* colonne 6, ligne 43 - ligne 64 *<br>* colonne 7, ligne 54 - ligne 68 *<br>* colonne 8, ligne 52 - ligne 59 *<br>* colonne 10, ligne 63 - colonne 11, ligne 33 *<br>* figures 6-8 *<br>--- | 1-4 | G02F1/133<br>G09G3/18<br>B60R1/08 |
| X | EP-A-0 144 828 (NIPPONDENSO CO)<br>* page 1, ligne 1 - ligne 12 *<br>* page 2, ligne 20 - page 3, ligne 14 *<br>* page 7, ligne 6 - page 8, ligne 2 *<br>* page 10, ligne 15 - page 11, ligne 8 *<br>* page 15, ligne 18 - page 17, ligne 2 *<br>* figures 1-2,12-13 * | 1-2,7-8 | |
| Y | idem<br>--- | 5-6 | |
| Y | US-A-3 601 614 (G. PLATZER ET AL.)<br>* colonne 2, ligne 33 - ligne 48; figure 2 * | 5-6 | |
| A | idem<br>--- | 7-8 | |
| A | US-A-4 820 933 (S. HONG ET AL.)<br>* abrégé; figure 2 *<br>----- | 4-5,7-8 | DOMAINES TECHNIQUES RECHERCHES (Int. Cl.5 )<br>G02F<br>G09G<br>B60R |

Le présent rapport a été établi pour toutes les revendications

| Lieu de la recherche | Date d'achèvement de la recherche | Examinateur |
|---|---|---|
| LA HAYE | 22 MAI 1992 | IASEVOLI R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..................................................
& : membre de la même famille, document correspondant